# FASCICULE DE BREVET EUROPEEN

(11) **EP 1 181 438 B1**
(45) Date de publication et mention de la délivrance du brevet: **03.05.2006**
(21) Numéro de dépôt: 00936979.4
(22) Date de dépôt: 30.05.2000
(51) Int. Cl.: F01D 9/04, F04D 29/44, F02C 3/09

(54) **TURBOMACHINE RADIALE**
RADIALE TURBOMASCHINE
RADIAL TURBO-MACHINE

(30) Priorité: 03.06.1999 FR 9907002
(43) Date de publication de la demande: 27.02.2002
(73) Titulaire: ONERA (Office National d'Etudes et de Recherches Aérospatiales), 92320 Châtillon (FR)
(72) Inventeur: RIBAUD, Yves, 78830 Bonnelles (FR)
(74) Mandataire: Bérogin, Francis
(86) Numéro de dépôt international: PCT/FR2000/001480
(87) Numéro de publication internationale: WO 2000/075490

(56) Documents cités:
- CH-A- 41 650
- DE-C- 232 348
- FR-A- 1 124 752
- US-A- 2 904 307
- US-A- 3 378 229
- US-A- 3 460 748
- US-A- 3 465 518
- US-A- 4 843 813

## Description

L'invention concerne des perfectionnements apportés aux turbomachines radiales, du type comportant au moins une turbine radiale centripète, comprenant un rotor monté en rotation dans un carter autour d'un axe de rotation, le rotor comportant un disque rotatif autour de son axe, qui est confondu avec l'axe de rotation, et dont une face du disque qui est tournée vers l'aval, par rapport au sens de circulation d'un fluide admis dans la turbine, est munie d'aubes.

Les turbines radiales centripètes et radiales-axiales de l'état de la technique comportent généralement, de l'amont vers l'aval, une volute d'alimentation, un distributeur lisse (c'est-à-dire sans aube) à parois fixes, puis un rotor radial centripète à aubes, ou un rotor radial-axial lorsque la veine d'écoulement dans le rotor passe de la direction radiale à la direction axiale, et enfin un diffuseur d'échappement lisse et généralement d'orientation axiale.

Dans une configuration à faible maître-couple d'une telle turbine, selon une variante connue, la turbine ne comporte pas de volute d'alimentation, et l'alimentation est assurée à l'aide d'une veine axiale-radiale centripète de révolution autour de l'axe de rotation. Selon une autre variante connue, un distributeur à aubes est disposé entre la volute d'alimentation ou la veine axiale-radiale d'alimentation et le distributeur lisse, voir par exemple de document CH-A-41 650.

Par ailleurs, le disque de rotor, dans la zone d'entrée, présente des échancrures importantes ou lunules entre les aubes, ce qui permet de diminuer les contraintes dans le rotor ainsi que son inertie.

Ces turbines radiales centripètes et radiales-axiales connues présentent les inconvénients suivants. Leur distributeur lisse a un rapport de rayon (rayon extérieur/rayon intérieur) généralement supérieur à 1,1, de façon à limiter l'érosion des bords de fuite des aubes du distributeur aubé, cette érosion étant due à la centrifugation de particules. En l'absenoe de distributeur aubé, le rapport de rayon du distributeur lisse est très important, car ce rapport de rayon conditionne la mise en vitesse du fluide. La vitesse du fluide en sortie du distributeur lisse étant importante, la longueur des lignes de courant étant importante, le coefficient de frottement étant non négligeable et le diamètre hydraulique faible, il en résulte que les pertes de pression d'arrêt par viscosité peuvent être significatives dans le distributeur lisse.

D'autre part, dans le rotor et plus précisément au niveau des échancrures de ce dernier, les pertes par frottement ne sont à nouveau pas négligeables, car la vitesse de frottement à considérer est la vitesse de l'écoulement par rapport au carter fixe, dest-à-dire une vitesse voisine de la vitesse de rotation du rotor.

Enfin, au niveau de l'échappement, et plus particulièrement pour les fonctionnements hors-adaptation (hors point nominal), le diffuseur axial d'échappement ne permet pas de transformer l'énergie cinétique tangentielle en pression. Ceci est rendu possible par l'utilisation d'un diffuseur d'échappement radial à parois fixes. Mais, dans ce dernier cas, le frottement tangentiel diminue fortement les gains de pression que l'on pourrait théoriquement atteindre par l'utilisation d'un tel organe.

Un but de l' invention est d'améliorer le rendement global de ce type de turbomachines en perfectionnant leur alimentation, et de préférence également, ou alternativement, leur échappement.

Un autre but de l'invention est de combiner, dans une telle turbomachine radiale, un compresseur centrifuge à la turbine centripète selon l'invention, pour obtenir un ensemble turbocompresseur dont les alimentations et/ou échappements respectifs sont perfectionnés, de sorte à améliorer le rendement global de l'ensemble turbocompresseur ainsi obtenu par rapport aux ensembles analogues de l'état de la technique, et en particulier en limitant l'encombrement axial d'un tel ensemble au prix d'une augmentation limitée du maitre-couple ainsi que du poids et de la complexité de structure d'un tel ensemble turbocompresseur.

Un autre but encore de l'invention est de proposer une turbomachine avec turbine radiale centripète et, éventuellement, compresseur radial centrifuge, qui peut être réalisée par la mise en oeuvre de techniques d'usinage bi-dimensionnel, du type micro-électronique.

Le domaine d'application visé par l'invention concerne essentiellement les micro-turbines, notamment du type de celles utilisées pour la réalisation de groupes auxiliaires de puissance pour aéronefs ou pour la propulsion d'engins volants sans pilote, tels que des microdrones.

A cet effet, l'invention propose une turbomachine comportant au moins une turbine radiale centripète, du type présenté ci-dessus, et qui se caractérise en ce que la turbine centripète est alimentée en fluide par un distributeur d'alimentation radial, lisse, librement tournant coaxialement au rotor de turbine, et entourant le rotor de turbine.

Un avantage essentiel procuré par le distributeur radial lisse librement tournant est qu'il permet de réduire très sensiblement les pertes par frottement sur les parois de cet organe, puisque l'énergie cinétique du fluide dans le mouvement lié aux parois est sensiblement divisée par un fadeur 4. De la même façon, au niveau des lunules du rotor, la présence du disque rotatif du distributeur permet de diminuer les pertes par frottement du fluide contre le carter fixe, puisque l'énergie cinétique du fluide dans le mouvement lié aux parois est encore divisée par un facteur 4.

Pour améliorer les performances, la turbomachine de l'invention comporte également et avantageusement au moins un compresseur radial centrifugé, comprenant un rotor coaxial au rotor de turbine et solidaire en rotation du rotor de turbine autour de l'axe de rotation, dans le carter, le rotor de compresseur comportant un disque rotatif coaxial au disque du rotor de turbine, et dont une face tournée vers l'amont, par rapport au sens de circulation d'un fluide admis dans le compresseur, est munie d'aubes comprimant le fluide vers un diffuseur d'échappement radial, lisse, et librement tournant coaxialement au distributeur radial, lisse et librement tournant d'alimentation de la turbine, le diffuseur d'échappement du compresseur entourant le rotor du compresseur et étant entouré d'une volute de reprise de l'écoulement de fluide, en communication avec une volute d'alimentation de fluide entourant le distributeur d'alimentation de la turbine, pour l'alimentation de cette dernière au travers dudit distributeur d'alimentation.

La fonction du diffuseur radial lisse d'échappement du compresseur est de transformer une partie de l'énergie cinétique acquise par le fluide en sortie de la roue du compresseur en élévation de pression, du fait de l'augmentation du rayon ou distance du point considéré à l'axe de rotation de la machine, et de la conservation du moment cinétique, au frottement près sur les parois, ce frottement étant réduit du-fait du montage librement tournant de ce diffuseur radial lisse. La présence de parois mobiles, tant pour le diffuseur radial lisse d'échappement du compresseur centrifuge que pour le distributeur radial lisse d'alimentation de la turbine centripète, permet de réduire sensiblement les pertes aérodynamiques par frottement entre fluide et parois dans les deux veines radiales lisses traversant l'une le diffuseur et l'autre le distributeur, ces pertes-aérodynamiques-étant-liées à l'existence d'un moment cinétique important aussi bien du côté du compresseur que du côté de la turbine.

Avantageusement, pour améliorer la compacité et simplifier la structure de la machine, et réduire encore les pertes aérodynamiques, le diffuseur radial lisse d'échappement du compresseur et le distributeur radial lisse d'alimentation de la turbine sont agencés en un unique ensemble librement rotatif coaxialement aux rotors de la turbine et du compresseur.

Dans cette architecture, il est avantageux que l'ensemble librement rotatif comprenne un disque intermédiaire, monté librement rotatif, entre les disques de rotor de la turbine et du compresseur, autour d'un arbre principal commun solidarisant les disques de rotor de la turbine et du compresseur en rotation autour de l'axe de rotation. Ainsi, les pertes par frottement au niveau des disques des rotors sont également diminuées du fait de la mise en rotation du disque intermédiaire entre les disques de rotor de la turbine et du compresseur.

Dans une structure de réalisation avantageusement simple et efficace, le diffuseur radial lisse et librement tournant d'échappement du compresseur est traversé par une veine radiale délimitée entre deux parois lisses en regard l'une de l'autre et de révolution autour de l'axe de rotation, et dont l'une est une paroi d'un disque aval, coaxial au rotor du compresseur et librement rotatif autour de l'axe de rotation, indépendamment du rotor du compresseur, l'autre paroi de la veine étant une paroi d'une couronne annulaire amont, coaxiale au rotor du compresseur et solidaire en rotation du disque aval dudit diffuseur d'échappement par des entretoises sensiblement axiales, en position sensiblement radiale externe, par rapport à l'axe de rotation, sur ladite couronne annulaire amont et sur ledit disque aval.

Cette structure, connue en soi, d'un compresseur centrifuge et de son diffuseur d'échappement radial, lisse et librement tournant autour de l'axe de rotation du rotor du compresseur, peut être transposée à la réalisation de la turbine centripète et de son distributeur d'alimentation radial, lisse et librement tournant autour de l'axe de rotation du rotor de la turbine, dans une turbomachine selon l'invention, pour en améliorer encore le rendement global.

De ce fait, le distributeur radial lisse et librement tournant d'alimentation de la turbine selon l'invention est avantageusement traversé par une veine radiale délimitée entre deux parois lisses en regard l'une de l'autre et de révolution autour de l'axe de rotation, et dont l'une est une paroi d'un disque amont, coaxial au rotor de turbine et librement rotatif autour de l'axe de rotation, indépendamment du rotor de turbine, l'autre paroi de la veine étant une paroi d'une couronne annulaire aval, coaxiale au rotor de turbine et solidaire en rotation du disque amont dudit distributeur d'alimentation par des entretoises sensiblement axiales, et en position sensiblement radiale externe, par rapport à l'axe de rotation, sur la couronne annulaire aval et le disque amont.

Ainsi, pour le diffuseur du compresseur comme pour le distributeur de la turbine, l'équipage mobile libre en rotation et constitué d'une couronne annulaire, d'un disque correspondant et des entretoises qui les solidarisent en rotation, prend une vitesse de rotation correspondant à l'équilibre entre un couple moteur, lié à l'entraînement par le fluide dans la veine radiale du diffuseur d'échappement ou du distributeur d'alimentation et par le fluide emprisonné entre les parois du disque de l'équipage mobile considéré et du disque de rotor correspondant, du compresseur ou de la turbine, et un couple résistant, qui est dû au freinage exercé par le fluide emprisonné entre la couronne annulaire correspondante et la paroi en regard du carter fixe de la machine.

Avantageusement, lorsque l'architecture avec disque librement rotatif solidarisé par des entretoises à une couronne annulaire, comme présentée ci-dessus, est adoptée pour le diffuseur d'échappement du compresseur comme pour le distributeur d'alimentation de la turbine, il est avantageux que le disque amont librement rotatif du distributeur radial lisse d'alimentation de la turbine et le disque aval librement rotatif du diffuseur radial lisse d'échappement du compresseur soient solidaires en rotation du disque intermédiaire de l'ensemble librement rotatif, et de préférence d'une seule pièce avec ce disque intermédiaire. On réduit encore ainsi les pertes aérodynamiques par frottement entre fluide et parois, tout en améliorant la compacité de la machine et en réduisant le nombre de ses composants, ce qui est un facteur d'économie.

Pour améliorer encore le rendement global de la machine, au niveau de la turbine, qui coopère ou non avec un compresseur centrifuge, un distributeur fixe à ailettes peut entourer le distributeur radial lisse et librement tournant d'alimentation de la turbine, et être lui-même entouré par la volute périphérique d'alimentation de la turbine. Si la turbomachine comporte un compresseur centrifuge dont le rotor est solidaire en rotation du rotor de la turbine centripète, le rendement global de la machine peut également être encore amélioré, au niveau du compresseur, à l'aide d'un diffuseur fixe à ailettes, qui entoure le diffuseur radial lisse et librement tournant d'échappement du compresseur et qui est lui-même entouré par la volute périphérique de reprise de l'écoulement de fluide.

Selon un autre aspect de l'invention, que la turbomachine comporte ou non un compresseur centrifuge, le rotor de la turbine centripète délivre avantageusement le fluide qui la traverse à un diffuseur d'échappement radial lisse et librement tournant coaxialement au rotor de turbine, dans le carter.

Avantageusement, ce diffuseur radial lisse et librement tournant d'échappement de la turbine peut présenter la même architecture générale que le diffuseur radial lisse et librement tournant d'échappement du compresseur et que le distributeur radial lisse et librement tournant d'alimentation de la turbine, tels que définis ci-dessus. Dans ce cas, le diffuseur radial lisse et librement tournant d'échappement de la turbine est également traversé par une veine radiale délimitée entre deux parois lisses en regard l'une de l'autre et de révolution autour de l'axe de rotation, dont l'une est une paroi d'un disque aval, coaxial au rotor de turbine et monté libre en rotation, indépendamment du rotor de turbine, autour de l'axe de rotation, par exemple en étant solidaire en rotation d'un arbre secondaire tubulaire, guidé en rotation par au moins un palier autour d'un moyeu coaxial du diffuseur d'échappement de la turbine, l'autre paroi de la veine étant une paroi d'une couronne annulaire amont coaxiale au rotor de turbine et solidaire en rotation du disque aval librement rotatif dudit diffuseur d'échappement de la turbine par des entretoises sensiblement axiales, et en position sensiblement radiale externe sur ladite couronne annulaire amont et ledit disque aval dudit diffuseur d'échappement de la turbine.

Bien qu'un diffuseur radial lisse et librement tournant soit plus difficile à réaliser qu'un diffuseur d'échappement axial lisse et fixe, et nécessite de plus une reprise de l'écoulement de fluide par une volute périphérique entourant le diffuseur radial lisse et librement tournant, l'adaptation de ce dernier sur l'échappement d'une turbine centripète procure, par rapport à l'adaptation d'un diffuseur axial lisse et fixe sur l'échappement d'une turbine centripète comme cela est connu de l'état de la technique, les avantages de permettre, outre un gain d'encombrement axial un abaissement de la vitesse tangentielle vers l'aval, et donc un accroissement de pression statique, plus important que celui constaté dans un diffuseur axial, de sorte qu'en particulier le couple sur l'arbre de la turbine, lors d'une phase de démarrage, est accru et le temps de réponse est abaissé. Le diffuseur radial d'échappement de la turbine permet donc de récupérer une fraction plus importante de l'énergie cinétique du fluide qu'avec un diffuseur axial, ce qui permet d'augmenter le rendement de la turbine et d'obtenir une puissance plus importante sur l'arbre de cette dernière. En outre, la diminution de la vitesse tangentielle dans un diffuseur radial lisse d'échappement de la turbine, suivie de la récupération du fluide par une volute périphérique, présente l'important avantage de conduire à un échappement silencieux, contrairement à la situation rencontrée avec un diffuseur axial lisse, dans lequel la concentration d'un écoulement giratoire près de l'axe de rotation de la machine entraîne l'existence, dans cette zone, d'un noyau de fluide « mort » et de phénomènes instationnaires, dus à un cisaillement entre le fluide « mort » et le fluide « sain », d'où l'existence d'un niveau de bruit non négligeable. Selon l'invention, le montage librement rotatif du diffuseur radial lisse d'échappement de la turbine augmente encore les qualités de la machine, du fait de la diminution des frottements entre le fluide et les parois de ce diffuseur, de sorte que le rendement et la puissance de la turbine centripète augmentent encore pour les fonctionnements hors-adaptation et en particulier au démarrage, et que le niveau de bruit diminue encore, ceci étant dû à l'abaissement du niveau de turbulence dans le diffuseur.

Lorsque la machine comporte un compresseur centrifuge, comme présenté ci-dessus, le rendement global est encore amélioré en alimentant le compresseur en fluide par un distributeur radial lisse et librement tournant coaxialement au rotor du compresseur, dans le carter.

De manière pratique, ce distributeur radial lisse et librement tournant d'alimentation du compresseur peut être réalisé avec l'architecture générale du distributeur radial d'alimentation de la turbine centripète et des diffuseurs radiaux d'échappement du compresseur centrifuge et de la turbine centripète tels que présentés ci-dessus. En particulier, le distributeur radial lisse et librement tournant d'alimentation du compresseur peut être traversé par une veine radiale délimitée entre deux parois lisses en regard l'une de l'autre et de révolution autour de l'axe de rotation, dont l'une est une paroi d'un disque amont, coaxial au rotor du compresseur et libre en rotation autour de l'axe de rotation, indépendamment du rotor du compresseur, par exemple en étant solidaire en rotation d'un arbre tertiaire tubulaire, guidé en rotation par au moins un palier autour d'un moyeu coaxial dudit distributeur d'alimentation du compresseur, l'autre paroi de la veine étant une paroi d'une couronne annulaire aval, coaxiale au rotor du compresseur et solidaire en rotation du disque amont librement rotatif du distributeur d'alimentation du compresseur par des entretoises sensiblement axiales, et en position sensiblement radiale externe sur ladite couronne annulaire aval et ledit disque amont dudit distributeur d'alimentation du compresseur.

Ce distributeur radial lisse et librement tournant, pour l'alimentation du compresseur, est mis en rotation du fait du couple de frottement dû à l'existence d'un moment cinétique dans le fluide traversant ce distributeur radial, dont la vitesse de rotation d'équilibre est obtenue pour l'équilibre entre le couple de frottement moteur précité et un couple de frottement résistant créé par le fluide emprisonné entre les faces en regard du disque amont et de la couronne annulaire aval de ce distributeur, d'une part, et le carter, d'autre part. La rotation libre de ce distributeur radial lisse permet de diminuer les pertes aérodynamiques dans cette zone de la machine.

Avantageusement de plus, ce distributeur radial lisse et librement tournant pour l'alimentation du compresseur est entouré d'un distributeur radial fixe à aubes orientables ou à calage variable, lorsqu'on souhaite faire varier le débit et le taux de compression de la machine, notamment pour les compresseurs de conditionnement d'air et ceux utilisés pour la réfrigération. En effet, il convient de noter que le compresseur centrifuge tel que défini ci-dessus, de préférence avec son diffuseur d'échappement radial lisse et librement tournant, et une volute périphérique de reprise de l'écoulement de fluide, avec éventuellement interposition d'un diffuseur radial fixe à ailettes entouré par cette volute et entourant le diffuseur radial lisse et librement tournant, et avec un distributeur radial lisse et librement tournant d'alimentation du compresseur, éventuellement précédé d'un distributeur radial fixe à aubes orientables entourant le distributeur radial lisse et librement tournant, constitue un compresseur centrifuge utilisable isolément, indépendamment de toute turbine centripète, et qui présente une structure originale par rapport aux compresseurs centrifuges de l'état de la technique et procure des avantages particulièrement notables sur ces derniers. Un tel compresseur centrifuge tel que défini ci-dessus constitue donc en soi une invention.

Lorsque la turbomachine est un turbocompresseur avec diffuseur radial lisse librement tournant d'échappement de la turbine et avec distributeur radial lisse et librement tournant d'alimentation du compresseur, les rotors de turbine et de compresseur peuvent être solidaires en rotation l'un de l'autre sur des tourillons coaxiaux autour de l'axe de rotation et entre les moyeux du diffuseur radial lisse d'échappement de la turbine et du distributeur radial lisse d'alimentation du compresseur. Mais, dans le cas d'un agencement en turbine à gaz, dans lequel une puissance utile est recherchée sur l'arbre de la turbine, les rotors de la turbine et du compresseur peuvent être solidaires en rotation du moyeu du diffuseur radial libre d'échappement de la turbine, ce moyeu du diffuseur étant monté rotatif, coaxialement autour de l'axe de rotation, dans le carter à l'aide d'au moins un palier supplémentaire, tandis que les rotors de turbine et du compresseur et le moyeu rotatif du diffuseur radial lisse d'échappement de la turbine sont montés en rotation sur le moyeu fixe du distributeur radial lisse d'alimentation du compresseur à l'aide par exemple d'un tourillon coaxial autour de l'axe de rotation.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue schématique en coupe axiale d'un turbocompresseur à diffuseurs d'échappement et distributeurs d'alimentation radiaux, lisses et librement tournants tant pour la turbine que pour le compresseur,
- la figure 1a est une vue schématique, en coupe transversale, d'un détail d'un distributeur radial fixe à aubes orientables du turbocompresseur de la figure 1, et
- la figure 2 est une vue analogue à la figure 1 d'une turbomachine de même nature fonctionnant en turbine à gaz.

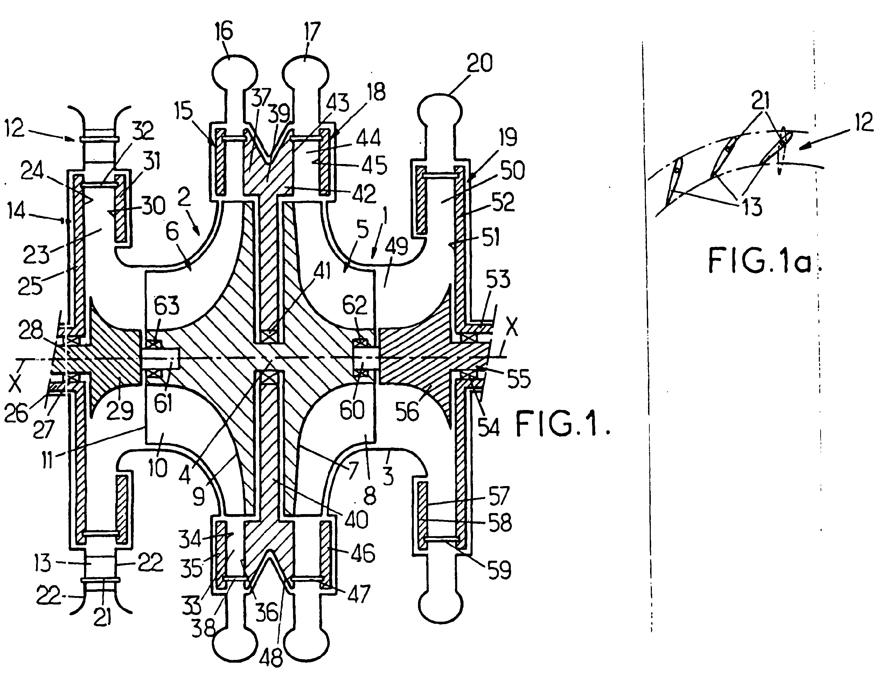

La turbomachine radiale de la figure 1 est un turbocompresseur combinant une turbine radiale centripète 1 et un compresseur radial centrifuge 2 dans un même carter repéré dans son ensemble en 3. Le compresseur centrifuge 2, en amont de la turbine centripète 1 par rapport au sens d'écoulement des fluides parcourant le compresseur 2 et la turbine 1 (de l'amont, sur la gauche de la figure 1 vers l'aval, sur la droite de la figure 1), est couplé mécaniquement à la turbine centripète 1 par un arbre principal 4, dont sont solidaires en rotation les rotors 5 et 6 respectivement de la turbine 1 et du compresseur 2. Ces rotors 5 et 6 sont coaxiaux autour de leur axe de rotation commun X-X, qui est l'axe de l'arbre principal 4 et l'axe longitudinal de la machine. Le rotor 5 de la turbine 1 comprend un disque principal ou roue centripète 7, dont la face tournée vers l'aval est munie d'aubes 8, et qui est à symétrie de révolution autour de son axe confondu avec l'axe de rotation X-X.

De manière analogue, le rotor 6 du compresseur 2 comprend un disque principal ou roue centrifuge 9, dont la face tournée vers l'amont est munie d'aubes 10 de compresseur, et qui est à symétrie de révolution autour de son axe confondu avec l'axe de rotation X-X Les deux rotors 5 et 6 sont solidaires en rotation autour de l'axe X-X par leurs roues 7 et 9 solidarisées par leur moyeu à l'arbre principal 4.

De manière connue, les aubes 10 du rotor centrifuge 6 assurent un transfert d'énergie entre ce rotor 6 et le fluide admis dans le compresseur 2, lequel peut être qualifié de rotor axialo-centrifuge lorsque la ligne des bords d'attaque 11 des aubes 10 du rotor 6 débute dans une partie axiale de la veine d'écoulement de fluide dans le carter 3.

De manière connue également, les aubes 8 du rotor centripète 5 assurent un transfert d'énergie entre le fluide qui traverse la turbine 1 et le rotor 5 de cette dernière.

Le compresseur centrifuge 2 est directement associé à des moyens d'alimentation et à des moyens d'échappement, essentiellement logés dans le carter 3, et qui comprennent, de l'amont vers l'aval, un distributeur radial fixe 12 à aubes ou ailettes orientables 13 (voir figure 1a) et un distributeur radial, lisse, tournant et libre 14, pour ce qui concerne les moyens d'alimentation, et un diffuseur radial, lisse, tournant et libre 15, éventuellement suivi d'un diffuseur fixe radial aileté (non représenté), et une volute périphérique 16 ou caisson de reprise de l'écoulement pour l'échappement du compresseur 2. Le distributeur radial fixe 12 entoure le distributeur radial lisse et librement tournant 14, de même que le diffuseur radial lisse librement tournant 15 entoure le rotor 6 du compresseur 2 en étant lui-même entouré par la volute périphérique 16, avec éventuellement interposition du diffuseur radial, fixe aileté (non représenté) qui, lorsqu'il est présent, entoure le diffuseur 15 en étant entouré par la volute périphérique 16.

De manière similaire, la turbine centripète 1 est directement associée à des moyens d'alimentation et à des moyens d'échappement, essentiellement logés dans le carter 3, et qui comprennent, de l'amont vers l'aval, et pour les moyens d'alimentation, une volute 17 d'alimentation en fluide de la turbine 1, cette volute 17 étant en communication avec la volute 16 de reprise de l'écoulement de fluide en sortie du compresseur 2, par exemple par l'intermédiaire d'une chambre de combustion, par laquelle un carburant est injecté dans un gaz comburant, tel que l'air, comprimé par le compresseur 2, et de sorte que les gaz de combustion sont collectés dans la volute 17 pour alimenter la turbine 1, dont les moyens d'alimentation comprennent également un distributeur 18 radial, lisse, et librement tournant, qui entoure le rotor 5 de la turbine 1 et est lui-même entouré par la volute périphérique d'alimentation 17, avec éventuellement interposition d'un distributeur radial fixe aileté (non représenté) entre la volute d'alimentation 17 et le distributeur 18, qui est alors entouré par ce distributeur fixe aileté, lui-même entouré par la volute périphérique 17. Pour les moyens d'échappement, la turbine 1 est associée à un diffuseur 19 radial, lisse et librement tournant et à une volute périphérique de sortie 20 collectant les fluides en sortie de la turbomachine radiale, et entourant le diffuseur 19.

Les diffuseurs radiaux, lisses et librement tournant 15 et 19 à l'échappement respectivement du compresseur 2 et de la turbine 1, ainsi que les distributeurs radiaux, lisses et librement tournant 14 et 18 d'alimentation respectivement du compresseur 2 et de la turbine 1 sont tous coaxiaux autour de l'axe de rotation X-X et montés librement rotatifs autour de cet axe X-X. De ce fait, les distributeurs 14 et 18 et diffuseurs15 et 19 radiaux, lisses et librement tournant associés d'une part au compresseur 2 et d'autre part à la turbine 1, sont donc coaxiaux au rotor 6 du compresseur 2 et au rotor 5 de la turbine 1 autour de cet axe X-X et rotatifs autour de ce même axe, indépendamment du rotor 6 ou 5 correspondant.

En considérant plus précisément la structure et le fonctionnement du turbocompresseur de l'amont vers l'aval, le distributeur radial fixe 12 à aubes orientables 13 permet de faire varier le débit et le taux de compression. Les aubes 13 de ce distributeur fixe 12 sont à calage variable, chacune autour d'un axe 21 parallèle à l'axe X-X, dans une veine annulaire coaxiale autour de l'axe X-X et délimitée entre deux parois 22 du carter 3 qui sont de révolution autour de l'axe X-X et tronconiques, ou planes et radiales comme sur la figure 1, et fixes en aval d'un convergent formé par les bords radiaux externes de ces parois 22.

Par rapport à un distributeur à aubes à veine axiale, le distributeur radial 12 à aubes 13 orientables présente l'avantage de ne nécessiter que des aubes 13 bidimensionnelles et des parois de veine 22 planes, alors que les aubes d'un distributeur à veine axiale ont une géométrie tridimensionnelle et sont montées entre des parois toroïdales de la veine pour minimiser les fuites entre les extrémités des aubes et les parties en regard du carter. Pour un calage angulaire donné des aubes 13, le distributeur fixe 12 permet d'obtenir un moment cinétique dont l'intensité détermine les performances du compresseur 2, pour une vitesse de rotation donnée du rotor 6 de ce compresseur et une perméabilité fixée du circuit de fluide en aval du rotor 6. Pour minimiser les pertes aérodynamiques, et donc améliorer le rendement et le taux de compression du compresseur 2, le distributeur fixe 12, dont les aubes 13 sont régulièrement réparties (voir figure 1 a) en direction circonférentielle, est avantageusement disposé à un rayon aussi élevé que possible autour de l'axe X-X, compatible avec le mètre-couple maximum souhaité pour le turbocompresseur, de sorte que le niveau de vitesse de l'écoulement de fluide entrant dans la turbomachine soit faible dans ce distributeur 12.

En aval de la grille formée par les aubes orientables 13 du distributeur fixe 12, le fluide entre ensuite dans le distributeur 14 radial, lisse et librement tournant, dont l'architecture à présent décrite est très semblable à celle des autres distributeur 18 et diffuseurs 15 et 19 radiaux, lisses et librement tournant.

Dans le distributeur 14, le fluide traverse une veine annulaire radiale 23 délimitée entre deux parois lisses, en regard l'une de l'autre et de révolution autour de l'axe de rotation X-X. Ces deux parois lisses, dépourvues d'aubes, peuvent être tronconiques ou, comme sur la figure 1, planes et radiales, dont l'une 24 est la paroi tournée vers l'aval sur un disque 25 principal ou amont du distributeur 14, ce disque 25 annulaire étant coaxial au rotor 6 du compresseur 2 et solidaire en rotation, par sa périphérie radiale interne (par rapport à l'axe de rotation X-X) d'un arbre tubulaire 26, coaxial à l'arbre principal 4 mais indépendant de ce dernier, et monté libre en rotation, coaxialement autour de l'axe de rotation X-X, dans une extension latérale du carter 3, sur des paliers tels que 27, qui sont des paliers à roulement dont un seul est représenté sur la figure 1, et monté dans l'arbre tubulaire 26 et autour de l'axe 28 d'un moyeu 29 fixe du distributeur 14. Ce moyeu 29 et son axe 28 sont également de révolution autour de l'axe de rotation X-X, et le moyeu 29 présente une surface latérale externe à concavité tournée radialement vers l'extérieur et vers les aubes 10 du rotor 6 du compresseur 2, de sorte à délimiter la face radiale interne de la veine de circulation de fluide entre le distributeur 14 et le compresseur 2, et dans le prolongement sensiblement du moyeu du disque 9 du rotor de compresseur 6 et de la paroi 24 du disque 25 du distributeur 14.

L'autre paroi lisse et radiale délimitant la veine 23 est la paroi 30, tour née vers l'amont, sur une couronne annulaire 31, de révolution autour de l'axe de rotation X-X, donc coaxiale au rotor 6, et dans une chambre annulaire et radiale correspondante du carter 3. La couronne annulaire 31 est solidarisée au disque 25 en regard par des entretoises 32, sensiblement parallèles à l'axe X-X, et régulièrement réparties en direction circonférentielle autour de cet axe, ces entretoises 32 étant en position radiale externe sur la couronne 31 et le disque 25, c'est-à-dire disposées vers la périphérie externe de la veine 23, où le niveau de vitesse du fluide est le plus faible, ces entretoises 32 étant éventuellement de plus profilées pour réduire leur traînée aérodynamique dans le mouvement relatif, en vue d'une optimisation pour un point de fonctionnement déterminé.

Dans ce distributeur radial et lisse 14, la couronne annulaire 31 et le disque principal 25, solidaires en rotation libre autour de l'axe X-X, sont mis en rotation du fait du couple de frottement dû à l'existence d'un moment cinétique fourni au fluide par le distributeur 12 à aubes 13. La vitesse de rotation d'équilibre de la couronne 31 et du disque 25 est obtenue pour l'équilibre du couple moteur précité et du couple résistant créé par le fluide emprisonné entre des faces internes du carter 3 et les faces de la couronne 31 et du disque 25 qui sont en regard et à proximité desdites faces intemes et fixes du carter 3. La mise en rotation de la couronne 31 et du disque 25 du distributeur radial lisse 14 permet de minimiser les pertes aérodynamiques dans cette zone, ces pertes étant divisées par un facteur 3 environ à la vitesse de rotation libre du diffuseur 14, par rapport à un diffuseur radial lisse et fixe.

Après passage dans le distributeur 14, le fluide est comprimé dans le compresseur centrifuge 2 et transmis au diffuseur d'échappement 15, qui est un diffuseur radial, lisse et librement tournant, dont l'agencement en aval d'un compresseur centrifuge est connu en soi, pour transformer une partie de l'énergie cinétique acquise par le fluide en élévation de pression, du fait à la fois de la conservation du moment cinétique (au frottement près sur les parois lisses de ce diffuseur 15) et de l'augmentation du rayon ou distance du point considéré à l'axe de rotation X-X. La poursuite de la transformation de l'énergie cinétique en augmentation de pression s'effectue dans le diffuseur aileté, en aval du diffuseur 15, lorsqu'un tel diffuseur aileté est prévu entre le diffuseur 15 et la volute 16, dans laquelle le fluide est ensuite collecté tangentiellement.

Le diffuseur radial lisse d'échappement du compresseur 2 est traversé par une veine annulaire et radiale 33 délimitée entre deux parois lisses, dépourvues d'aubes, en regard l'une de l'autre et de révolution autour de l'axe de rotation X-X, ces parois lisses pouvant être tronconiques ou, comme représenté sur la figure 1, des parois planes et radiales, dont l'une 34 est une paroi tournée vers l'aval, sur une couronne annulaire amont 35, coaxiale au rotor 6 du compresseur 2 et logée dans une chambre de forme correspondante du carter 3, autour de ce rotor de compresseur 6. L'autre paroi de la veine 33 est une paroi 36, tournée vers l'amont, sur un disque aval 37, qui est également coaxial au rotor 6 du compresseur 2 et librement rotatif autour de l'axe de rotation X-X, indépendamment de ce rotor de compresseur 6. La couronne annulaire 35 est rendue solidaire en rotation du disque 37 par des entretoises 38, analogues aux entretoises 32, et donc sensiblement axiales, régulièrement réparties en direction circonférentielle autour de l'axe X-X et profilées aérodynamiquement, en position radiale externe, c'est-à-dire sur la périphérie externe de la couronne 35 et du disque 37.

La veine d'écoulement de fluide est ainsi délimitée, de l'amont du rotor 6 du compresseur 2 à l'aval du diffuseur librement tournant 15, ou du diffuseur aileté qui lui fait suite, par des surfaces de révolution autour de l'axe X-X, et au niveau du compresseur 2, la veine d'écoulement est délimitée entre le carter fixe 3 et la surface mobile du disque 9 du rotor 6, tandis qu'au niveau du diffuseur radial lisse 15, cette veine est délimitée par les deux parois 34 et 36 qui sont radiales, lisses et librement tournantes avec la couronne 35 et le disque 37 solidaires en rotation autour de l'axe X-X Le cas échéant, la veine d'écoulement est délimitée dans le diffuseur aileté, qui entoure le diffuseur 15, par deux surfaces en regard qui sont planes ou tronconiques et fixes, solidaires du carter 3, et entre lesquelles s'étendent des ailettes profilées.

La libre rotation des parois 34 et 36 permet d'éviter de perdre en frottement une partie de l'énergie cinétique transmise au fluide par le disque ou roue centrifuge 9 du compresseur 2, et la vitesse de rotation de fonctionnement de la couronne 35 et du disque 37 librement tournant, correspond à l'équilibre entre le couple moteur de frottements dûs à l'entraînement par le fluide traversant la veine 33 et celui emprisonné entre le disque 40 et la roue 9, et un couple résistant de frottement, dû au freinage exercé par le fluide emprisonné entre le carter fixe 3 et la couronne annulaire 35.

Selon une particularité propre à l'invention, dans le diffuseur radial lisse et librement tournant 15, sur l'échappement du compresseur centrifuge 2, le disque aval 37 de ce diffuseur 15 est constitué par la partie annulaire frontale, vers l'amont, d'une tête 39 axialement élargie à l'extrémité radiale externe (par rapport à l'axe X-X) d'un disque intermédiaire 40, s'étendant radialement entre les disques 7 et 9 des rotors 5 et 6 respectivement de la turbine 1 et du compresseur 2, ce disque intermédiaire 40 étant annulaire et solidaire par sa périphérie radiale interne de la cage externe d'un palier à roulement 41, dont la cage interne entoure l'arbre principal 4, coaxialement à ce dernier. Le disque intermédiaire 40 est ainsi monté libre en rotation autour de l'axe X-X, indépendamment de l'arbre principal 4 et des deux disques de rotor 7 et 9, rapprochés mais distincts, et solidaires de l'arbre principal 4.

Concernant les rotors 5 et 6, cette réalisation permet d'obtenir une bonne compacité tout en préservant les avantages d'une réalisation à deux disques distincts 7 et 9 pour les rotors 5 et 6 de la turbine 1 et du compresseur 2, le disque 9 du compresseur pouvant être un disque plein en aluminium par exemple, pour limiter son inertie, tandis que le disque 7 de la turbine 1 peut être en acier ou en céramique, pour résister aux hautes températures, et présenter, entre ses aubes 8, des échancrures réalisées sous la forme de lunules pratiquées à la périphérie du disque 7, de façon à réduire les contraintes et à diminuer son inertie, la réalisation en deux disques de rotor distincts 7 et 9 étant également favorable d'un point de vue énergétique, puisque limitant les transferts thermiques par conduction du rotor de turbine 5 vers le rotor de compresseur 6.

Concernant le disque intermédiaire 40 librement tournant, cette réalisation est également avantageuse parce que la partie annulaire frontale, tournée vers l'aval, sur la tête élargie 39 du disque intermédiaire 40, constitue un disque amont 42, coaxial au rotor 5 de la turbine 1 et entourant ce rotor 5, et dont la paroi 43 radiale, lisse et tournée vers l'aval, constitue l'une des deux parois planes et de révolution autour de l'axe X-X, entre lesquelles est délimitée la veine radiale et annulaire 44 traversant le distributeur 18 radial, lisse et librement tournant, pour l'alimentation de la turbine centripète 1. L'autre des deux parois en regard l'une de l'autre et délimitant la veine 44 est la paroi 45 plane, radiale et tournée vers l'amont, sur une couronne annulaire 46, également coaxiale au rotor 5 et autour de ce dernier, dans une chambre de forme correspondante du carter 3, cette couronne 46 étant rendue solidaire en rotation du disque intermédiaire 40 par des entretoises 47, analogues aux entretoises 38, et donc sensiblement axiales, profilées, régulièrement réparties en direction circonférentielle autour de l'axe X-X, et en position radiale externe sur la couronne 46 comme sur le disque 42.

On obtient ainsi une réalisation dans laquelle le diffuseur d'échappement 15 et le distributeur d'alimentation 18 sont sensiblement symétriques l'un de l'autre par rapport au plan médian du disque intermédiaire 40, perpendiculairement à l'axe X-X. En outre, la tête élargie 39 du disque intermédiaire 40 présente, dans sa périphérie radiale externe, une échancrure 48 en forme de V afin de minimiser les contraintes, la face en regard du carter fixe 3 présentant une forme en V correspondante.

La réalisation du diffuseur radial lisse 15 d'échappement du compresseur 2 et du distributeur radial lisse 18 d'alimentation de la turbine 1 à l'aide des deux couronnes annulaires 35 et 46 solidarisées à la tête 39 du disque intermédiaire 40 libre en rotation autour de l'axe X-X permet d'agencer le diffuseur 15 et le distributeur 18 en un unique ensemble combiné, librement rotatif coaxialement aux rotors 5 et 6 de la turbine 1 et du compresseur 2. En d'autres termes, l'originalité de l'ensemble- combiné librement tournant, dont l'organe essentiel est le disque intermédiaire 40, réside dans le fait que le disque amont 42 du distributeur radial lisse 18 d'alimentation de la turbine 1 et le disque aval 37 du diffuseur radial lisse 15 d'échappement du compresseur 2, sont solidaires en rotation du disque intermédiaire 40 du fait de leur réalisation d'une seule pièce avec ce disque 40.

Ainsi, les deux couronnes 35 et 46 permettent d'obtenir, en association avec le disque intermédiaire 40 et sa tête élargie 39, tant pour le diffuseur radial lisse 15 du compresseur centrifuge 2 que pour le distributeur radial lisse 18 de la turbine centripète 1, des parois mobiles, réduisant très sensiblement les pertes aérodynamiques par frottement entre fluides et parois dans les deux veines radiales lisses 33 et 44 correspondantes, ces pertes aérodynamiques étant liées à fexistenoe d'un moment cinétique important aussi bien du côté du compresseur 2 que de la turbine 1. Les pertes par frottement de disque au niveau des rotors 5 et 6 sont également diminuées du fait de la mise en rotation libre du disque intermédiaire 40 entre les rotors 5 et 6. Ainsi, l'ensemble combiné librement rotatif, constitué par le disque intermédiaire 40 et les couronnes associées 35 et 46, prend une vitesse de rotation qui correspond à l'équilibre entre un couple moteur, lié à l'entraînement par les fluides traversant les veines radiales lisses 33 et 44 respectivement du diffuseur 15 et du distributeur 18 et par les fluides emprisonnés entre les parois du disque intermédiaire 40 et les parois en regard des disques 7 et 9 des rotors 5 et 6, et le couple résistant dû au freinage exercé par les fluides emprisonnés entre les couronnes annulaires 35 et 46 et les parties fixes en regard du carter 3.

En variante, la veine radiale 44 du distributeur lisse 18 pourrait également être délimitée entre deux parois en regard de forme tronconique et librement tournantes autour de l'axe X-X, en aval de deux surfaces fixes de révolution autour de l'axe X-X et en regard l'une de l'autre pour délimiter la veine traversant l'éventuel distributeur aileté et fixe monté autour du distributeur 18 radial, lisse et librement tournant, entre ce dernier et la volute 17 périphérique d'alimentation de la turbine 1.

Après leur sortie de la roue de la turbine centripète 1 et leur passage dans un court tronçon axial 49 de transition de la veine de circulation, les fluides traversent une veine radiale et annulaire 50 du diffuseur 19 radial, lisse et librement tournant d'échappement de la turbine 1. Comme les veines radiales précédemment décrites, la veine 50 est délimitée entre deux parois lisses en regard l'une de l'autre et dépourvues d'aubes, qui sont de révolution autour de l'axe de rotation X-X et peuvent être tronconiques ou, comme représenté sur la figure 1, des parois planes et radiales. L'une d'elles est une paroi 51, tournée vers l'amont, sur un disque principal ou aval 52, coaxial au rotor 5 de la turbine 1 et monté libre en rotation, indépendamment de ce rotor 5, autour de l'axe de rotation X-X Ceci est obtenu par le fait que le disque radial 52 est annulaire et solidarisé, par sa périphérie radiale interne, à une extrémité d'un autre arbre tubulaire 53, qui est guidé en rotation, coaxialement autour de l'axe X-X, et dans le carter 3, à l'aide de paliers à roulement dont l'un 54 est monté à l'intérieur de l'arbre tubulaire 53 et autour d'un axe 55 coaxial d'un moyeu 56 également coaxial du diffuseur 19. Ce moyeu 56 est sensiblement symétrique du moyeu 29 du distributeur 14 d'alimentation du compresseur 2, et ce moyeu 56 présente également une surface radiale externe de révolution autour de l'axe de rotation X-X et à concavité tournée radialement vers l'extérieur et vers l'amont (vers les aubes 8 du rotor 5 de la turbine 1) pour assurer, avec la paroi en regard du carter 3, une transition entre le court tronçon axial de veine 49 et la veine radiale 50 du diffuseur 19.

L'autre paroi délimitant cette veine 50 est la paroi 57, tournée vers l'aval, sur une couronne annulaire amont 58, coaxiale au rotor 5 de la turbine 1 autour de l'axe de rotation X-X, et logée dans une chambre de forme correspondante du carter fixe 3. Cette couronne annulaire 58 est rendue solidaire du disque 52 librement tournant par des entretoises 59, analogues aux entretoises 47, 38 et 21, c'est-à-dire sensiblement axiales, profilées, régulièrement réparties en direction circonférentielle autour de l'axe X-X et en position radiale externe sur la couronne 58 et le disque 52.

La fonction de ce diffuseur 19 radial, lisse et librement tournant d'échappement de la turbine centripète 1 est, comme celle de n'importe quel diffuseur lisse connu en aval d'un rotor de turbine, de récupérer une fraction de l'énergie cinétique du fluide, pour augmenter le rendement de la turbine 1 et obtenir une puissance plus importante sur son arbre 4. En effet, pour une pression d'échappement fixée, en général égale à la pression atmosphérique en sortie de la volute 20 de reprise de l'écoulement en sortie du diffuseur radial 19 ou d'un éventuel diffuseur fixe aileté pouvant entourer le diffuseur 19, entre ce dernier et la volute 20, l'augmentation de pression dans le diffuseur 19 permet d'abaisser la pression statique dans la section de sortie du rotor 5 de la turbine 1, cette section de sortie étant située dans le court tronçon axial de veine 49, ce qui permet donc d'augmenter la puissance disponible sur l'arbre 4 de la turbine 1.

Le diffuseur 19 lisse à veine 50 radiale (ou axialo-radiale du fait du court tronçon de veine axiale 49), bien qu'étant plus difficile à réaliser qu'un diffuseur axial lisse, notamment parce qu'il rend nécessaire la reprise de l'écoulement en sortie par la volute 20, est toutefois bien plus avantageux qu'un diffuseur axial lisse, principalement pour les trois raisons suivantes.

En phase de démarrage, et pour les fonctionnements hors-adaptation (ou en dehors du point nominal), un moment cinétique résiduel existe dans le fluide dans la section de sortie du rotor 5 de la turbine 1. Du fait du changement de rayon résultant de la présence du diffuseur radial 19, ce diffuseur 19 permet l'abaissement de la vitesse tangentielle vers l'aval, et donc une augmentation de pression statique plus importante que celle constatée dans un diffuseur axial. En particulier, lors d'une phase de démarrage, le couple sur l'arbre 4 est augmenté en conséquence, et le temps de réponse du turbocompresseur est donc abaissé.

La seconde raison est que la diminution de la vitesse tangentielle dans le diffuseur radial 19, suivie de la récupération du fluide par la volute 20, présente l'avantage important de conduire à un échappement silencieux, contrairement à la situation rencontrée avec un diffuseur axial lisse, dans lequel la concentration d'un écoulement giratoire près de l'axe de la machine entraîne l'existence dans cette zone d'un noyau de fluide inerte et de phénomènes instationnaires dûs à des cisaillements entre le fluide inerte et le fluide en écoulement giratoire autour du fluide inerte, d'où l'existence d'un niveau de bruit non négligeable.

La troisième raison est que cette disposition permet de concevoir des turbomachines ayant un encombrement réduit selon l'axe de rotation.

Dans le diffuseur radial et lisse 19, la mise en rotation libre des parois 51 et 57 délimitant la veine radiale 50 augmente encore les qualités de ce diffuseur radial 19 du fait de la diminution des frottements entre fluides et parois. Il en résulte que le rendement et la puissance de la turbine centripète 1 augmentent encore pour les fonctionnements hors-adaptation et en particulier au démarrage, et que le niveau de bruit est davantage encore abaissé, ceci étant dû à l'abaissement du niveau de turbulence dans le diffuseur 19.

Pour la réalisation du distributeur 14 et du diffuseur 19, qui sont radiaux, lisses et librement tournants, respectivement à l'alimentation du compresseur centrifuge 2 et à l'échappement de la turbine centripète 1, les matériaux utilisés sont choisis de manière à limiter leur inertie. Concernant le diffuseur 19, et compte tenu des températures des gaz encore relativement élevées à l'échappement de la turbine 1, un matériau de type céramique, résistant bien à ces températures, est avantageusement choisi.

Dans l'exemple de la figure 1, les rotors 5 et 6 de la turbine 1 et du compresseur 2, qui sont solidaires en rotation l'un de l'autre par l'arbre principal 4, sont montés en rotation autour de l'axe X-X sur des tourillons 60 et 61 coaxiaux autour de cet axe X-X et en saillie axiale chacun sur l'un respectivement des deux moyeux 56 et 29 qui, dans cet exemple, peuvent tous deux être fixes, et avec interposition de paliers à roulement 62 et 63 respectivement entre le moyeu du disque 7 du rotor de turbine 5 et le tourillon 60 du moyeu 56 pour le palier 62, et entre le moyeu du disque 9 du rotor de compresseur 6 et le tourillon 61 du moyeu 29 pour le palier 63.

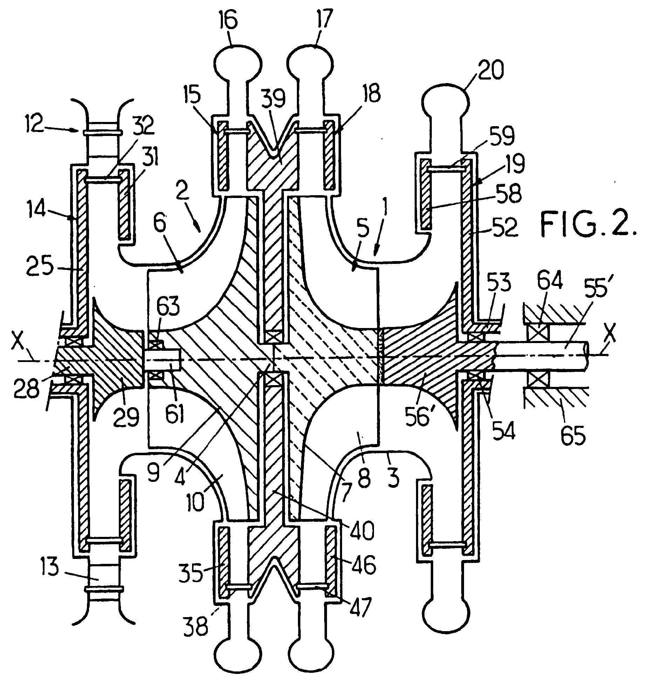

Dans le cas d'un fonctionnement en turbine à gaz, comme représenté sur la figure 2, une puissance utile est recherchée sur l'arbre de la turbine centripète 1. Dans ce cas, le moyeu 56' du diffuseur 19 d'échappement de la turbine 1 est rendu solidaire en rotation du moyeu du disque centripète 7 de la turbine 1, et donc de l'ensemble des deux rotors 5 et 6, solidaires l'un de l'autre par l'arbre principal 4, du turbocompresseur 1. Un autre palier à roulement 64 est monté entre un carter externe 65, fixe et solidaire du carter 3, et autour de l'axe 55' du moyeu 56', cet axe 55' prolongeant l'arbre principal 4 et étant ainsi l'arbre de sortie de la turbine 1, sur lequel une puissance est disponible.

Pour le reste, la structure et le fonctionnement de la turbine à gaz de la figure 2 sont les mêmes que pour l'exemple de la figure 1, de sorte que les mêmes références numériques repèrent les organes analogues. Toutefois, sur la figure 2, le disque 7 du rotor 5 de la turbine 1 est représenté comme réalisé par exemple en céramique, le disque 9 du rotor 6 du compresseur 2 restant réalisé par exemple en aluminium, comme dans l'exemple de la figure 1.

Grâce à l'ensemble des améliorations obtenues par la réduction des frottements au niveau des lunules pratiquées dans le disque 7, des distributeurs et diffuseurs radiaux, lisses et librement tournant, et parcourus par des écoulements giratoires de fluides, une turbine à gaz réalisée conformément à l'invention peut conduire à des gains de l'ordre de 10 à 15% sur la consommation spécifique, toute chose égale par ailleurs.

## Revendications

1. Turbomachine comportant au moins une turbine radiale centripète (1), comprenant un rotor (5), monté en rotation dans un carter (3), autour d'un axe de rotation (X-X), le rotor (5) comportant un disque (7), rotatif autour de son axe confondu avec l'axe de rotation (X-X), et dont une face tournée vers l'aval, par rapport au sens de circulation d'un fluide admis dans la turbine (1), est munie d'aubes (8), **caractérisée en ce que** la turbine centripète (1) est alimentée en fluide par un distributeur d'alimentation (18) radial, lisse, librement tournant coaxialement au rotor (5) de turbine (1), et entourant le rotor de turbine (5).

2. Turbomachine selon la revendication 1, **caractérisée en ce qu'**elle comporte également au moins un compresseur radial centrifuge (2), comprenant un rotor (6) coaxial au rotor (5) de turbine (1) et solidaire en rotation du rotor de turbine autour de l'axe de rotation (X-X), dans le carter (3), le rotor (6) de compresseur (2) comportant un disque (9) rotatif coaxial au disque (7) du rotor (5) de turbine (1), et dont une face tournée vers l'amont, par rapport au sens de circulation d'un fluide admis dans le compresseur (2), est munie d'aubes (10) comprimant le fluide vers un diffuseur (15) d'échappement radial, lisse, et librement tournant coaxialement au distributeur (18) radial, lisse et librement tournant d'alimentation de la turbine (1), le diffuseur d'échappement (15) du compresseur (2) entourant le rotor (6) du compresseur (2) et étant entouré d'une volute (16) de reprise de l'écoulement de fluide, en communication avec une volute (17) d'alimentation de fluide entourant le distributeur (18) d'alimentation de la turbine (1).

3. Turbomachine selon la revendication 2, **caractérisée en ce que** le diffuseur (15), radial lisse d'échappement du compresseur (2) et le distributeur radial lisse (18) d'alimentation de la turbine (1) sont agencés en un unique ensemble librement rotatif coaxialement aux rotors (5,6) de la turbine (1) et du compresseur (2).

4. Turbomachine selon la revendication 3, **caractérisée en ce que** ledit ensemble librement rotatif comprend un disque intermédiaire (40), monté librement rotatif, entre les disques (7,9) de rotor (5,6) de la turbine (1) et du compresseur (2), autour d'un arbre principal (4) commun solidarisant les disques (7,9) de rotor (5,6), de la turbine (1) et du compresseur (2) en rotation autour de l'axe de rotation (X-X).

5. Turbomachine selon l'une quelconque des revendications 2 à 4, **caractérisée en ce que** le - diffuseur (15) radial lisse et librement tournant d'échappement du compresseur (2) est traversé par une veine radiale (33) délimitée entre deux parois lisses en regard l'une de l'autre et de révolution autour de l'axe de rotation (X-X), et dont l'une est une paroi (36) d'un disque aval (37), coaxial au rotor (6) du compresseur (2) et librement rotatif autour de l'axe de rotation (X-X), indépendamment du rotor (6) du compresseur (2), l'autre paroi de la veine (33) étant une paroi (34) d'une couronne annulaire (35) amont, coaxiale au rotor (6) du compresseur (2) et solidaire en rotation du disque aval (37) dudit diffuseur d'échappement (15) par des entretoises (38) sensiblement axiales, en position sensiblement radiale externe, par rapport à l'axe de rotation (X-X), sur ladite couronne annulaire amont (35) et sur ledit disque aval (37).

6. Turbomachine selon l'une quelconque des revendications 1 à 5, **caractérisée en ce que** le distributeur (18) radial lisse et librement tournant d'alimentation de la turbine (1) est traversé par une veine radiale (44) délimitée entre deux parois lisses (43,45) en regard l'une de l'autre et de révolution autour de l'axe de rotation (X-X), et dont l'une est une paroi (43) d'un disque amont (42), coaxial au rotor (5) de turbine (1) et librement rotatif autour de l'axe de rotation (X-X), indépendamment du rotor (5) de turbine (1), l'autre paroi de la veine (44) étant une paroi (45) d'une couronne annulaire aval (46), coaxiale au rotor (5) de turbine (1) et solidaire en rotation du disque amont (42) dudit distributeur d'alimentation (18) par des entretoises (47) sensiblement axiales, et en position sensiblement radiale externe, par rapport à l'axe de rotation (X-X), sur ladite couronne annulaire aval (46) et ledit disque amont (42).

7. Turbomachine selon la revendication 6 telle que rattachée à la revendication 5 elle-même rattachée à la revendication 4, **caractérisée en ce que** le disque amont (42) librement rotatif du distributeur radial lisse (18) d'alimentation de la turbine (1) et le disque aval (37) librement rotatif du diffuseur radial lisse (15) d'échappement du compresseur (2) sont solidaires en rotation du disque intermédiaire (40) de l'ensemble librement rotatif, et de préférence d'une seule pièce avec ledit disque intermédiaire (40).

8. Turbomachine selon l'une quelconque des revendications 2 à 5 et 7, **caractérisée en ce qu'**un diffuseur fixe à ailettes entoure le diffuseur (15) radial lisse et librement tournant d'échappement du compresseur (2) et est lui-même entouré par la volute (16) périphérique de reprise de l'écoulement de fluide.

9. Turbomachine selon l'une quelconque des revendications 1 à 8, **caractérisée en ce qu'**un distributeur fixe à ailettes entoure le distributeur (18) radial lisse et librement tournant d'alimentation de la turbine (1) et est lui-même entouré par une volute (17) périphérique d'alimentation de la turbine (1).

10. Turbomachine selon l'une quelconque des revendications 1 à 9, **caractérisée en ce que** le rotor de la turbine centripète (1) délivre le fluide à un diffuseur (19) d'échappement radial, lisse et librement tournant coaxialement au rotor (5) de turbine (1), dans ledit carter (3).

11. Turbomachine selon la revendication 10, **caractérisée en ce que** le diffuseur (19) radial lisse et librement tournant d'échappement de la turbine (1) est traversé par une veine radiale (50) délimitée entre deux parois (51,57) lisses en regard l'une de l'autre et de révolution autour de l'axe de rotation (X-X), dont l'une est une paroi (51) d'un disque aval (52), coaxial au rotor (5) de turbine (1) et monté libre en rotation, indépendamment du rotor (5) de turbine (1), autour de l'axe de rotation (X-X), en étant solidaire en rotation d'un arbre secondaire tubulaire (53), guidé en rotation par au moins un palier (54) autour d'un moyeu (56) coaxial du diffuseur (19) d'échappement de la turbine (1), l'autre paroi de la veine (50) étant une paroi (57) d'une couronne annulaire amont (58) coaxiale au rotor (5) de turbine (1) et solidaire en rotation du disque aval (52) librement rotatif dudit diffuseur (19) d'échappement de la turbine (1) par des entretoises (59) sensiblement axiales, et en position sensiblement radiale externe sur ladite couronne annulaire amont (58) et ledit disque aval (52) dudit diffuseur (19) d'échappement de la turbine (1).

12. Turbomachine selon l'une quelconque des revendications 2 à 5,7,8 et 11 **caractérisée en ce que** le compresseur (2) est alimenté en fluide par un distributeur (14) radial, lisse et librement tournant coaxialement au rotor (6) du compresseur (2), dans ledit carter (3).

13. Turbomachine selon la revendication 12, **caractérisée en ce que** le distributeur (14) radial lisse et librement tournant d'alimentation du compresseur (2) est traversé par une veine radiale (23) délimitée entre deux parois lisses (24,30) en regard l'une de l'autre et de révolution autour de l'axe de rotation (X-X), dont l'une (24) est une paroi d'un disque amont (25), coaxial au rotor (6) du compresseur (2) et libre en rotation autour de l'axe de rotation (X-X), indépendamment du rotor (6) du compresseur (2), en étant solidaire en rotation d'un arbre tertiaire tubulaire (26), guidé en rotation par au moins un palier (27) autour d'un moyeu (28,29) coaxial dudit distributeur (14) d'alimentation du compresseur (2), l'autre paroi de la veine (23) étant une paroi (30) d'une couronne annulaire aval (31), coaxiale au rotor (6) du compresseur (2) et solidaire en rotation du disque amont (25) librement rotatif du distributeur (14) d'alimentation du compresseur (2) par des entretoises (32) sensiblement axiales, et en position sensiblement radiale externe sur ladite couronne annulaire aval (31) et ledit disque amont (25) dudit distributeur (14) d'alimentation du compresseur (2).

14. Turbomachine selon l'une quelconque des revendications 12 et 13, **caractérisée en ce que** le distributeur (14) radial lisse et librement tournant d'alimentation du compresseur (2) est entouré d'un distributeur (12) radial fixe à aubes (13) orientables.

15. Turbomachine selon la revendication 13 telle que rattachée à la revendication 11, **caractérisée en ce que** les rotors (5,6) de turbine (1) et de compresseur (2) sont solidaires en rotation l'un de l'autre sur des tourillons (60,61) coaxiaux autour de l'axe de rotation (X-X) et entre les moyeux (56,29) du diffuseur radial lisse (19) d'échappement de la turbine (1) et du distributeur radial lisse (14) d'alimentation du compresseur (2).

16. Turbomachine selon la revendication 13 telle que rattachée à la revendication 11, **caractérisée en ce que** les rotors (5,6) de turbine (1) et de compresseur (2) sont solidaires en rotation du moyeu (56') du diffuseur radial libre (19) d'échappement de la turbine (1), ledit moyeu (56') du diffuseur (19) étant monté rotatif, coaxialement autour de l'axe de rotation (X-X), dans le carter (3,65) à l'aide d'au moins un palier supplémentaire (64), tandis que les rotors (5,6) de turbine (1) et de compresseur (2) et le moyeu rotatif (56') du diffuseur radial lisse (19) d'échappement de la turbine (1) sont montés en rotation sur le moyeu fixe (29) du distributeur (14) radial lisse d'alimentation du compresseur (2) à l'aide d'un tourillon (61) coaxial autour de l'axe de rotation (X-X).

## Patentansprüche

1. Strömungsmaschine, mit mindestens einer zentripetalen Rädialturbine (1), welche einen Rotor (5) aufweist, der in einem Gehäuse (3) drehbar um eine Rotationsachse (X-X) montiert ist, wobei der Rotor (5) eine Scheibe (7) aufweist, die um ihre mit der Rotationsachse (X-X) zusammenfallende Achse drehbar und stromab relativ zur Umlaufrichtung eines in die Turbine (1) eingeleiteten Fluids mit Schaufeln (8) versehen ist, **dadurch gekennzeichnet, dass** die zentripetale Turbine (1) über einen glatten, radialen, koaxial zum Rotor (5) der Turbine (1) frei drehbaren und den Turbinenrotor (5) umgebenden Einlassverteiler (18) mit Fluid beschickt wird.

2. Strömungsmaschine nach Anspruch 1, **dadurch gekennzeichnet, dass** sie des Weiteren mindestens einen Radialverdichter (2) aufweist, welcher einen zum Rotor (5) der Turbine (1) koaxialen und mit dem Turbinenrotor um die Rotationsachse (X-X) drehfesten Rotor (6) im Gehäuse (3) aufweist, wobei der Rotor (6) des Verdichters (2) eine zur Scheibe (7) des Rotors (5) der Turbine (1) koaxial drehbare Scheibe (9) aufweist, die stromauf relativ zur Umlaufrichtung eines in den Verdichter (2) eingeleiteten Fluids mit Schaufeln (10) versehen ist, die das Fluid in Richtung eines glatten, radialen und koaxial zum glatten, radialen und frei drehbaren Einlassverteiler (18) der Turbine (1) frei drehbaren Auslaufdiffusors (15) verdichtet, wobei der Auslaufdiffusor (15) des Verdichters (2) den Rotor (6) des Verdichters (2) umgibt und von einer Schnecke (16) zur Fortsetzung der Fluidableitung umgeben ist, welche mit einer Speiseschnecke (17), die den Einlassverteiler (18) der Turbine (1) umgibt, verbunden ist.

3. Strömungsmaschine nach Anspruch 2, **dadurch gekennzeichnet, dass** der glatte, radiale Auslaufdiffusor (15) des Verdichters (2) und der glatte, radiale Einlassverteiler (18) der Turbine (1) als eine einheitliche Baugruppe, die koaxial zu den Rotoren (5, 6) der Turbine (1) und des Verdichters (2) frei drehbar gelagert ist, ausgebildet sind.

4. Strömungsmaschine nach Anspruch 3, **dadurch gekennzeichnet, dass** die genannte frei drehbare Baugruppe eine zwischenscheibe (40) aufweist, die zwischen den Scheiben (7, 9) der Rotoren (5, 6) der Turbine (1) und des Verdichters (2) um eine gemeinsame Hauptwelle (4), durch die die um die Rotationsachse drehbar gelagerten Scheiben (7, 9) der Rotoren (5, 6) der Turbine (1) und des Verdichters (2) verbunden werden, frei drehbar gelagert ist.

5. Strömungsmaschine nach einem der Ansprüche 2 bis 4, **dadurch gekennzeichnet, dass** den glatten, radialen und frei drehbaren Auslaufdiffusor (15) des Verdichters (2) ein radialer Kanal (33) durchquert, der durch zwei glatte, einander gegenüberliegende und um die Rotationsachse (X-X) rotationssymmetrisch ausgebildete Wände begrenzt wird, wobei eine von diesen eine Wand (36) einer Stromab-Scheibe (37) ist, die koaxial zum Rotor (6) des Verdichters (2) angeordnet sowie frei und vom Rotor (6) des Verdichters (2) unabhängig um die Rotationsachse (X-X) drehbar gelagert ist, und die andere Wand des Kanals (33) eine Wand (34) eines Stromauf-Rings (35) ist, der koaxial zum Rotor (6) des Verdichters (2) angeordnet und mit der Stromab-Scheibe (37) des genannten Auslaufdiffusors (15) durch weitestgehend axiale Stege (38) in weitestgehend radialer Außenposition relativ zur Rotationsachse (X-X) an dem genannten Stromauf-Ring (35) und an der genannten Stromab-Scheibe (37) drehfest verbunden ist.

6. Strömungsmaschine nach einem der Ansprüche 1 bis 5, **dadurch gekennzeichnet, dass** den glatten, radialen und frei drehbaren Einlassverteiler (18) der Turbine (1) ein radialer Kanal (44) durchquert, der durch zwei glatte, einander gegenüberliegende und um die Rotationsachse (X-X) rotationssymmetrisch ausgebildete Wände (43, 45) begrenzt wird, wobei eine von diesen eine Wand (43) einer Stromauf-Scheibe (42) ist, die koaxial zum Rotor (5) der Turbine (1) angeordnet sowie frei und vom Rotor (5) der Turbine (1) unabhängig um die Rotationsachse (X-X) drehbar gelagert ist, und die andere Wand des Kanals (44) eine Wand (45) eines Stromab-Rings (46) ist, der koaxial zum Rotor (5) der Turbine (1) angeordnet und mit der Stromauf-Scheibe (42) des genannten Einlassverteilers (18) durch weitestgehend axiale Stege (47) in weitestgehend radialer Außenposition relativ zur Rotationsachse (X-X) an dem genannten Stromab-Ring (46) und der genannten Stromauf-Scheibe (42) drehfest verbunden ist.

7. Strömungsmaschine nach Anspruch 6, rückbezogen auf Anspruch 5, dieser wiederum rückbezogen auf Anspruch 4, **dadurch gekennzeichnet, dass** die frei drehbare Stromauf-Scheibe (42) des glatten, radialen Einlassverteilers (18) der Turbine (1) und die frei drehbare Stromab-Scheibe (37) des glatten, radialen Auslaufdiffusors (15) des Verdichters (2) drehfest mit der Zwischenscheibe (40) der frei drehbaren Baugruppe verbunden und vorzugsweise mit der genannten Zwischenscheibe (40) als ein Teil ausgebildet sind.

8. Strömungsmaschine nach einem der Ansprüche 2 bis 5 und 7, **dadurch gekennzeichnet, dass** ein fester Schaufeldiffusor den glatten, radialen und frei drehbaren Auslaufdiffusor (15) des Verdichters (2) umgibt und dieser wiederum von der Außenschnecke (16) zur Fortsetzung der Fluidableitung umgeben ist.

9. Strömungsmaschine nach einem der Ansprüche 1 bis 8, **dadurch gekennzeichnet, dass** ein fester Schaufelverteiler den glatten, radialen und frei drehbaren Einlassverteiler (18) der Turbine (1) umgibt und dieser wiederum von einer Außenschnecke (17) zur Speisung der Turbine (1) umgeben ist.

10. Strömungsmaschine nach einem der Ansprüche 1 bis 9, **dadurch gekennzeichnet, dass** der Rotor der zentripetalen Turbine (1) das Fluid einem glatten, radialen und koaxial zum Rotor (5) der Turbine (1) frei drehbaren Auslaufdiffusor (19) im genannten Gehäuse (3) zuführt.

11. Strömungsmaschine nach Anspruch 10, **dadurch gekennzeichnet, dass** den glatten, radialen und frei drehbaren Auslaufdiffusor (19) der Turbine (1) ein radialer Kanal (50) durchquert, der durch zwei glatte, einander gegenüberliegende und um die Rotationsachse rotationssymmetrisch ausgebildete Wände (51, 57) begrenzt wird, wobei eine von diesen eine Wand (51) einer Stromab-Scheibe (52) ist, die koaxial zum Rotor (5) der Turbine (1) angeordnet sowie frei und vom Rotor (5) der Turbine (1) unabhängig drehbar um die Rotationsachse (X-X) montiert ist sowie mit einer sekundären röhrenförmigen Welle (53) drehfest verbunden ist, die bei der Drehbewegung von mindestens einem Lager (54) an einer koaxial zum Auslaufdiffusor (19) der Turbine (1) angeordneten Nabe (56) geführt wird, und die andere Wand des Kanals (50) eine Wand (57) eines Stromauf-Rings (58) ist, der koaxial zum Rotor (5) der Turbine (1) angeordnet ist und mit der frei drehenden Stromab-Scheibe (52) des genannten Auslaufdiffusors (19) der Turbine (1) durch weitestgehend axiale Stege (59) in weitestgehend radialer Außenposition an dem genannten Stromauf-Ring (58) und der genannten Stromab-Scheibe (52) des genannten Auslaufdiffusors (19) der Turbine (1) drehfest verbunden ist.

12. Strömungsmaschine nach einem der Ansprüche 2 bis 5, 7, 8 und 11, **dadurch gekennzeichnet, dass** der Verdichter (2) durch einen glatten, radialen und koaxial zum Rotor (6) des Verdichters (2) frei drehbaren Verteiler (14) im genannten Gehäuse (3) mit Fluid beschickt wird.

13. Strömungsmaschine nach Anspruch 12, **dadurch gekennzeichnet, dass** den glatten, radialen und frei drehbaren Einlassverteiler (14) des Verdichters (2) ein radialer Kanal (23) durchquert, der durch zwei glatte, einander gegenüberliegende und um die Rotationsachse (X-X) rotationssymmetrisch ausgebildete Wände (24, 30) begrenzt wird, wobei eine (24) von diesen eine Wand einer Stromauf-Scheibe (25) ist, die koaxial zum Rotor (6) des Verdichters (2) angeordnet sowie frei und vom Rotor (6) des Verdichters (2) unabhängig um die Rotationsachse (X-X) drehbar gelagert ist sowie mit einer tertiären röhrenförmigen Welle (26) drehfest verbunden ist, die bei der Drehbewegung von mindestens einem Lager (27) an einer koaxialen Nabe (28, 29) des genannten Einlassverteilers (14) des Verdichters (2) geführt wird, und die andere Wand des Kanals (23) eine Wand (30) eines Stromab-Rings (31) ist, der koaxial zum Rotor (6) des Verdichters (2) angeordnet und mit der frei drehbaren Stromauf-Scheibe (25) des Einlassverteilers (14) des Verdichters (2) durch weitestgehend axiale Stege (32) in weitestgehend radialer Außenposition an dem genannten Stromab-Ring (31) und der genannten Stromauf-Scheibe (25) des genannten Einlassverteilers (14) des Verdichters (2) drehfest verbunden ist.

14. Strömungsmaschine nach einem der Ansprüche 12 und 13, **dadurch gekennzeichnet, dass** der glatte, radiale und frei drehbare Einlassverteiler (14) des Verdichters (2) von einem festen, radialen Verteiler (12) mit verstellbaren Schaufeln (13) umgeben ist.

15. Strömungsmaschine nach Anspruch 13, rückbezogen auf Anspruch 11, **dadurch gekennzeichnet, dass** die Rotoren (5, 6) der Turbine (1) und des Verdichters (2) über koaxiale Drehzapfen (60, 61) um die Rotationsachse (X-X) sowie zwischen den Naben (56, 29) des glatten, radialen Auslaufdiffusors (19) der Turbine (1) und des glatten, radialen Einlassverteilers (14) des Verdichters (2) drehfest miteinander verbunden sind.

16. Strömungsmaschine nach Anspruch 13, rückbezogen auf Anspruch 11, **dadurch gekennzeichnet, dass** die Rotoren (5, 6) der Turbine (1) und des Verdichters (2) mit der Nabe (56') des freien, radialen Auslaufdiffusors (19) der Turbine (1) drehfest verbunden sind, wobei die genannte Nabe (56') des Diffusors (19) koaxial um die Rotationsachse (X-X) drehbar im Gehäuse (3, 65) mithilfe von mindestens einem zusätzlichen Lager (64) montiert ist, wohingegen die Rotoren (5, 6) der Turbine (1) und des Verdichters (2) und die drehbare Nabe (56') des glatten, radialen Auslaufdiffusors (19) der Turbine (1) drehbar auf der festen Nabe (29) des glatten, radialen Einlassverteilers (14) des Verdichters (2) mithilfe eines koaxialen Drehzapfens (61) um die Rotationsachse (X-X) montiert sind.

## Claims

1. A turbomachine comprising at least one centripetal radial turbine (1) comprising a rotor (5) mounted to rotate in a casing (3) about an axis of rotation (X-X), the rotor (5) comprising a disk (7) that can rotate about its axis which is coincident with the axis of rotation (X-X), and of which a face facing in the downstream direction with respect to the direction of flow of a fluid let into the turbine (1) is fitted with blades (8), **characterized in that** the centripetal turbine (1) is supplied with fluid by a plain radial inlet nozzle (18) rotating freely and coaxially with respect to the turbine (1) rotor (5) and surrounding the turbine rotor (5).

2. The turbomachine as claimed in claim 1, **characterized in that** it also comprises at least one centrifugal radial compressor (2) comprising a rotor (6) coaxial with the turbine (1) rotor (5) and rotating as one with the turbine rotor about the axis of rotation (X-X) in the casing (3), the compressor (2) rotor (6) comprising a rotary disk (9) coaxial with the turbine (1) rotor (5) disk (7) and of which a face facing in the upstream direction with respect to the direction of flow of a fluid let into the compressor (2) is equipped with blades (10) compressing the fluid toward a plain radial exhaust diffuser (15) rotating freely and coaxially with respect to the plain and freely rotating radial turbine (1) inlet nozzle (18), the compressor (2) exhaust diffuser (15) surrounding the compressor (2) rotor (6) and being surrounded by a fluid flow uptake volute (16) in communication with a fluid inlet volute (17) surrounding the turbine (1) inlet nozzle (18).

3. The turbomachine as claimed in claim 2, **characterized in that** the compressor (2) plain radial exhaust diffuser (15) and the turbine (1) plain radial inlet nozzle (18) are arranged as a single assembly free to rotate coaxially with respect to the turbine (1) and compressor (2) rotors (5, 6).

4. The turbomachine as claimed in claim 3, **characterized in that** said freely rotating assembly comprises an intermediate disk (40) mounted so that it is free to rotate, between the turbine (1) and compressor (2) rotor (5, 6) disks (7, 9), about a common main shaft (4) connecting together the turbine (1) and compressor (2) rotor (5, 6) disks (7, 9) so that they rotate as one about the axis of rotation (X-X) .

5. The turbomachine as claimed in any of claims 2 to 4, **characterized in that** the compressor (2) plain and freely rotating radial exhaust diffuser (15) has, passing through it, a radial duct (33) delimited between two plain walls facing one another and axisymmetrical about the axis of rotation (X-X), and of which one is a wall (36) of a downstream disk (37) coaxial with the compressor (2) rotor (6) and free to rotate about the axis of rotation (X-X) independently of the compressor (2) rotor (6), the other wall of the duct (33) being a wall (34) of an upstream annular ring (35) coaxial with the compressor (2) rotor (6) and secured to the downstream disk (37) of said exhaust diffuser (15) so that it rotates as one therewith, by substantially axial spacer pieces (38) in a substantially external radial position, with respect to the axis of rotation (X-X), on said upstream annular ring (35) and on said downstream disk (37).

6. The turbomachine as claimed in any of claims 1 to 5, **characterized in that** the turbine (1) plain and freely rotating radial inlet nozzle (18) has, passing through it, a radial duct (44) delimited between two plain walls (43, 45) facing one another and axisymmetrical about the axis of rotation (X-X), and of which one is a wall (43) of an upstream disk (42) coaxial with the turbine (1) rotor (5) and free to rotate about the axis of rotation (X-X) independently of the turbine (1) rotor (5), the other wall of the duct (44) being a wall (45) of a downstream annular ring (46) coaxial with the turbine (1) rotor (5) and secured to the upstream disk (42) of said inlet nozzle (18) so that it rotates as one therewith, by substantially axial spacer pieces (47) in a substantially external radial position, with respect to the axis of rotation (X-X), on said downstream annular ring (46) and on said upstream disk (42).

7. The turbomachine as claimed in claim 6 as attached to claim 5 itself attached to claim 4, **characterized in that** the freely rotating upstream disk (42) of the turbine (1) plain radial inlet nozzle (18) and the freely rotating downstream disk (37) of the compressor (2) plain radial exhaust diffuser (15) rotate as one with the intermediate disk (40) of the freely rotating assembly, and are preferably of one single piece with said intermediate disk (40).

8. The turbomachine as claimed in any of claims 2 to 5 and 7, **characterized in that** a fixed bladed diffuser surrounds the compressor (2) plain and freely rotating radial exhaust diffuser (15) and is itself surrounded by the fluid flow uptake peripheral volute (16).

9. The turbomachine as claimed in any of claims 1 to 8, **characterized in that** a fixed bladed inlet nozzle surrounds the turbine (1) plain and freely rotating radial inlet nozzle (18) and is itself surrounded by a turbine (1) inlet peripheral volute (17).

10. The turbomachine as claimed in any of claims 1 to 9, **characterized in that** the rotor of the centripetal turbine (1) delivers the fluid to a plain and freely rotating radial exhaust diffuser (19) rotating coaxially with respect to the turbine (1) rotor (5) in said casing (3).

11. The turbomachine as claimed in claim 10, **characterized in that** the turbine (1) plain and freely rotating radial exhaust diffuser (19) has, passing through it, a radial duct (50) delimited between two plain walls (51, 57) facing each other and axisymmetrical about the axis of rotation (X-X), of which one is a wall (51) of a downstream disk (52) coaxial with the turbine (1) rotor (5) and mounted so that it is free to rotate independently of the turbine (1) rotor (5) about the axis of rotation (X-X), rotating as one with a tubular secondary shaft (53), guided in rotation by at least one bearing (54) about a coaxial hub (56) of the turbine (1) exhaust diffuser (19), the other wall of the duct (50) being a wall (57) of an upstream annular ring (58) coaxial with the turbine (1) rotor (5) and being secured to the freely rotating downstream disk (52) of the turbine (1) exhaust diffuser (19) so as to rotate as one therewith by substantially axial spacer pieces (59) and in a substantially external radial position on said upstream annular ring (58) and said downstream disk (52) of said turbine (1) exhaust diffuser (19).

12. The turbomachine as claimed in any of claims 2 to 5, 7, 8 and 11, **characterized in that** the compressor (2) is supplied with fluid by a plain radial inlet nozzle (14) rotating freely and coaxially with respect to the compressor (2) rotor (6) inside said casing (3).

13. The turbomachine as claimed in claim 12, **characterized in that** the compressor (2) plain and freely rotating radial inlet nozzle (14) has, passing through it, a radial duct (23) delimited between two plain walls (24, 30) facing each other and axisymmetrical about the axis of rotation (X-X), of which one (24) is a wall of an upstream disk (25) coaxial with the compressor (2) rotor (6) and mounted so that it is free to rotate independently of the compressor (2) rotor (6) about the axis of rotation (X-X), rotating as one with a tubular tertiary shaft (26), guided in rotation by at least one bearing (27) about a coaxial hub (28, 29) of said compressor (2) inlet nozzle (14), the other wall of the duct (23) being a wall (30) of a downstream annular ring (31) coaxial with the compressor (2) rotor (6) and being secured to the freely rotating upstream disk (25) of the compressor (2) inlet nozzle (14) so as to rotate as one therewith by substantially axial spacer pieces (32) and in a substantially external radial position on said downstream annular ring (31) and said upstream disk (25) of said compressor (2) inlet nozzle (14).

14. The turbomachine as claimed in either of claims 12 and 13, **characterized in that** the compressor (2) plain and freely rotating radial inlet nozzle (14) is surrounded by a fixed radial inlet nozzle (12) with orientable blades (13).

15. The turbomachine as claimed in claim 13 as attached to claim 11, **characterized in that** the turbine (1) and compressor (2) rotors (5, 6) rotate as one with one another on coaxial journals (60, 61) about the axis of rotation (X-X) and between the hubs (56, 29) of the turbine (1) plain radial exhaust diffuser (19) and the compressor (2) plain radial inlet nozzle (14).

16. The turbomachine as claimed in claim 13 as attached to claim 11, **characterized in that** the turbine (1) and compressor (2) rotors (5, 6) rotate as one with the hub (56') of the turbine (1) free radial exhaust diffuser (19), said diffuser (19) hub (56') being mounted so that it can rotate coaxially about the axis of rotation (X-X) in the casing (3, 65) via at least one additional bearing (64), while the turbine (1) and compressor (2) rotors (5, 6) and the turbine (1) plain radial exhaust diffuser (19) rotary hub (56') are mounted so that they rotate on the fixed hub (29) of the compressor (2) plain radial inlet nozzle (14) via a journal (61) coaxial with the axis of rotation (X-X).
